# EUROPEAN PATENT SPECIFICATION

(11) **EP 2 721 929 B1**
(45) Date of publication and mention of the grant of the patent: **12.12.2018**
(21) Application number: 13189167.3
(22) Date of filing: 17.10.2013
(51) Int. Cl.: A01M 7/00

(54) **Agricultural sprayer**
Landwirtschaftliche Sprüheinrichtung
Pulvérisateur agricole

(30) Priority: 18.10.2012 GB 201218741
(43) Date of publication of application: 23.04.2014
(73) Proprietor: Househam Sprayers Limited, Lincoln, Lincolnshire LN5 0PE (GB)
(72) Inventor: Kneen, Andrew, Sleaford, NG34 8XA (GB); Cotton, Martin, Horncastle, LN9 6LH (GB)
(74) Representative: Loven, Keith James

(56) References cited:
- EP-A1- 2 106 935
- CN-U- 202 068 856
- CN-U- 202 068 857
- FR-A1- 2 866 787
- JP-A- 2002 079 155
- US-A- 3 666 177

## Description

### Field of the Invention

This invention relates to a self-propelled agricultural sprayer.

### Background to the Invention

A typical self-propelled agricultural sprayer consists of a chassis mounting a driving cab, an engine, a tank for liquid to be sprayed, along with associated pumps and pipework, and a foldable spray boom. The arrangement of these components will determine the convenience of use and the performance of the sprayer. For example, the ground clearance needs to be sufficient to pass over the crops to be sprayed, and the weight of the 3000-4000 litres of liquid (for example) in the tank, along with that of the other components, needs to be distributed as uniformly as possible across the four wheels of the sprayer. This is further complicated by the fact that the weight of liquid decreases as the spraying operation progresses.

In the UK and other parts of Europe, the need to use public roads to travel between spraying locations favours the positioning of the cab at the front of the sprayer, while the boom will be mounted at the rear. The weight of the boom is substantial, and this can tend to move the centre of gravity of the sprayer towards the rear, with consequent risk of traction and balance difficulties when operating in hilly terrain. To counteract this, it is conventional to locate the engine, which represents a significant part of the mass of the sprayer, as far forward as possible. Since mounting the engine forward of the cab reduces convenience and safety on public roads, it is generally mounted immediately to the rear of the cab.

This arrangement, however, has some disadvantages. Firstly, the effect of the tank in balancing the mass of the rear-mounted boom will vary as the tank empties, since it may not be possible to locate the entire tank within the wheelbase of the sprayer. The only way to avoid this problem is to extend the wheelbase of the sprayer, but this in turn increases the size of the sprayer, making the machine less manoeuvrable, heavier, and more costly to operate.

Reference is made herein to the following documents:
FR2866787, which discloses a self-propelled spraying machine. The engine has a frame receiving oscillating and fixed axles at its front and rear or inversely. The frame has fixation points at front of a vertical plane and fixation points at rear of a vertical plane for mounting a spraying bar and its lifting system assembly at front/rear of a front or rear wheel and mounting a fuel reservoir and rotary washer block at rear/front of the rear or front wheel.

US3666177 discloses a self-propelled orchard sprayer. The sprayer is single-engined, wherein the fan speed can be pre-set at the optimum value for the job at hand, while the ground speed of the sprayer can be varied at will by the operator, during spraying.

EP2106935 discloses a vehicle. The vehicle is provided with an axle suspended from a main frame of the vehicle by right- and left-hand pairs of connecting rods. As viewed from the top, one of each of the right- and left-hand pairs of connecting rods crosses the other of the pair of rods, and, as viewed from the side, the right- and left-hand pairs of rods are disposed parallel to each other. This arrangement of the connecting rods results in the axle moving substantially vertically up and down during operation of vehicle over uneven terrain.

### Summary of the Invention

A self-propelled agricultural sprayer according to claim 1, comprising a supporting frame or chassis mounted on wheels and having mounted thereon at a front end thereof a driving cab and at the other end thereof a support structure carrying a spray boom, a tank for spray liquid being mounted to the rear of the cab, and a modular power supply unit being mounted between the tank and the support structure, characterised in that the spray boom is mounted on a boom mounting arm in the form of a rectangular frame pivotally mounted on the support structure, the support structure being upstanding from the chassis at a position just forward of the rear wheel axis, the pivoting of the rectangular frame on the support structure being controlled by a pair of hydraulic rams, to enable the boom, detachably mounted on the rearmost part of the arm, to be raised and lowered.

It has surprisingly been found that this arrangement permits the weight of the sprayer to be more evenly distributed between the four wheels under all operating conditions, while permitting a very compact configuration. The sprayer can thus be lighter and more economical both to construct and to operate than other types of self-propelled sprayer. The mounting of the engine to the rear of the tank also offers the advantage of lower noise in the cab, saving the need for costly noise-reduction measures and improving the working environment for the operator. It is also unnecessary to provide covers for the engine and associated pumps, thus further reducing costs, while improving accessibility for maintenance.

Preferably, the tank and the modular power supply unit are both mounted within the wheelbase of the sprayer.

The boom support is in the form of a pivoting arm, enabling the boom to be lifted between an operative position nearer to the ground and an elevated transport position wherein the boom can be folded against the sides of the sprayer. This arrangement is lighter in weight than the more usual vertical slide arrangement employed in many sprayers, and also has the advantage that the weight of the boom is moved forwardly when the boom is lowered for spraying, enhancing stability.

The modular power unit may be bolted on to the supporting frame or chassis. In this way the modular power unit can readily be removed from the sprayer for maintenance purposes.

Preferably, the other components, such as the tank for the spray liquid, associated pumps and pipework, the driving cab, and the boom, are also mounted on the supporting frame or chassis in such a manner as to permit their ready removal for maintenance, enabling the sprayer to be easily and economically maintained.

The self-propelled agricultural sprayer may comprise a supporting frame or chassis carried by two pairs of wheels, each pair of wheels being mounted on downwardly-directed limbs extending from opposed ends of a floating cross-beam secured to an A-frame pivotally connected to the supporting frame or chassis, springs being mounted between the cross-beam and the supporting frame or chassis.

The springs may comprise adjustable air springs, and usually shock absorbers will be mounted in parallel to the springs.

This configuration ensures that the load is distributed uniformly when traversing uneven terrain, thereby avoiding tipping or loss of traction.

### Brief Description of the Drawings

In the drawings, which illustrate an exemplary embodiment of the sprayer of the invention:
Figure 1 is a side elevation of the complete sprayer;
Figure 2 is a top plan view of the sprayer;
Figure 3 is a rear view of the sprayer;
Figure 4 is an underneath view of the sprayer chassis; and
Figure 5 is a side view of the sprayer chassis before mounting of the operating components.

### Detailed Description of the Illustrated Embodiment

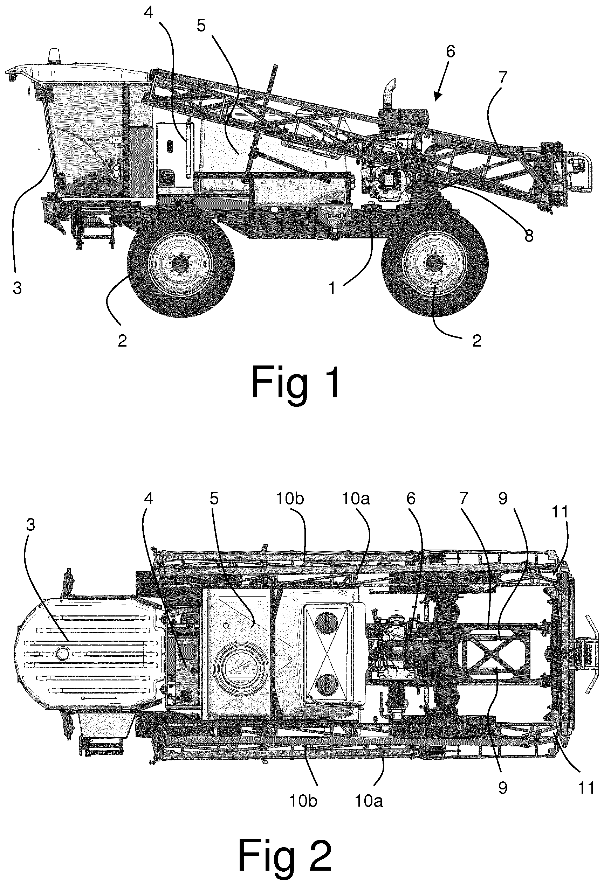

Referring to Figures 1 and 2, the self-propelled sprayer has a chassis 1 carried on four wheels 2, each being steerable and driven by a respective hydraulic motor as hereinafter described. A driving cab 3 is mounted at the front end of the chassis, forward of the front wheels for maximum visibility. The driving cab 3 will contain controls for steering, controlling the speed, and braking of the sprayer, and at least basic controls for the spraying operation, in conventional manner. Immediately to the rear of the cab 3 the chassis 1 carries a clean water tank 4 and its associated pump, and to the rear of this is mounted the main spray liquid tank 5, which can be formed of glass-reinforced plastics or stainless steel, for example.

A modular power supply unit 6 is located on the chassis to the rear of the tank. This consists of a diesel engine and an associated hydraulic pump driven thereby. The power supply unit 6 is configured to be secured on the chassis by four bolts, and to permit the ready attaching and detaching of the hydraulic pipes to the pump. The pressurised hydraulic fluid supplied by the pump is used to drive the hydraulic motors for each wheel, a hydraulic power steering system, and the sprayer pumps delivering spray liquid to spray nozzles along the boom, as well as a tank wash-out pump connected between the clean water tank 4 and the spray liquid tank 5. Hydraulic power is also used to control the deployment of the boom, as hereinafter described.

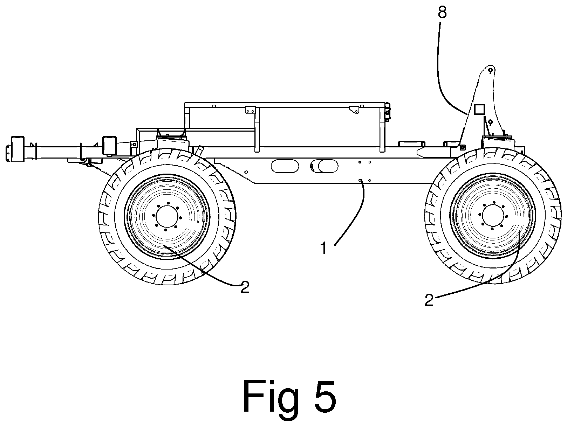

A boom-mounting arm 7 is pivotally mounted on support structure 8 upstanding from the chassis 1 at a position just forward of the rear wheel axis, as can be seen more clearly from Figure 5. The arm 7 is in the form of a rectangular frame, whose pivoting on the support structure 8 is controlled by a pair of hydraulic rams 9, to enable the boom 10, detachably mounted on the rearmost part of the arm 7, to be raised and lowered. The boom 10 is formed with two folding sections 10a and 10b on each side of the sprayer, hydraulic rams 11 being provided to rotate the sections 10a and 10b relative to the sprayer and to each other to extend them for use and to fold them inwards for road transit when not spraying. The extension and folding of the boom are in most respects conventional, but the mounting of the boom on a pivoting arm structure 7 simplifies lifting and lowering, and reduces the weight of the structure as compare with the conventional sliding elevator arrangement.

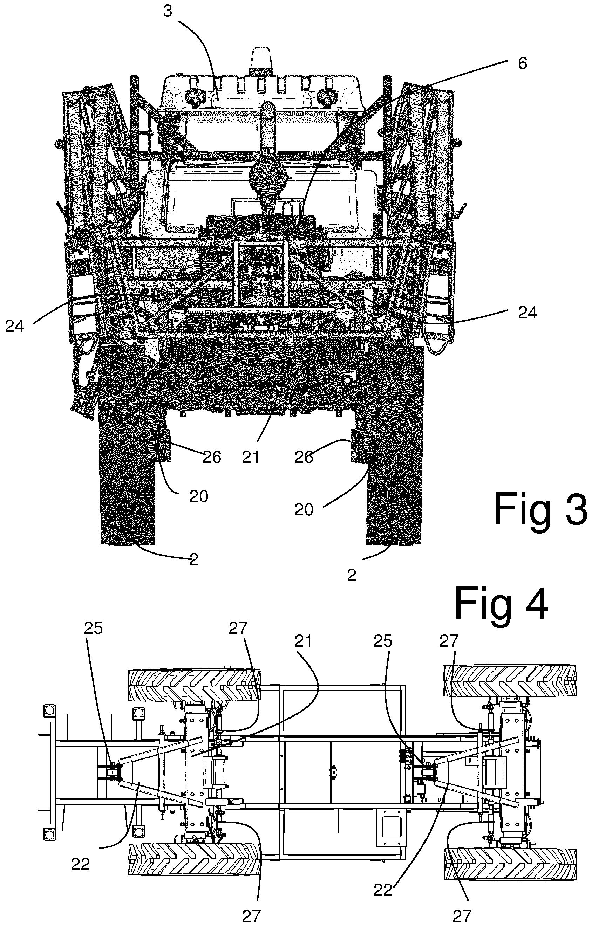

Referring now to Figures 3 and 4, the wheels 2 are each mounted on a respective limb 20 extending downwardly from a floating cross-beam 21 which is carried on an A-frame 22 (Figure 4), with adjustable air springs 23 mounted between the chassis 1 and the cross-beam 21, along with shock absorbers 24. The apex of each A-frame 22 is mounted on a pivot 25 on the chassis which is configured to allow some limited rotation about a longitudinal axis. In this way the mass of the sprayer is distributed more uniformly to the wheels 2. The pivot 25 is forward of the respective wheels so that the A-frame 22 is trailing in normal operation.

Each wheel 2 is driven by a respective hydraulic motor 26 carried by the limb 20, which is itself pivotally connected to the cross-beam 21 with a vertical axis of rotation, hydraulic steering rams 27 extending from the chassis controlling pivoting of the limbs 20 and thus the steering of the sprayer. Individual control of each wheel 2 allows for proper adjustment of track in turning corners.

As may be seen from Figure 5, the chassis is of relatively simple construction, with all the components being readily demountable therefrom for maintenance, repair or replacement, reducing the cost of maintenance.

## Claims

1. A self-propelled agricultural sprayer, comprising a supporting frame or chassis (1) mounted on wheels (2) and having mounted thereon at a front end thereof a driving cab (3) and at the other end thereof a support structure (8) carrying a spray boom (10), a tank (5) for spray liquid being mounted to the rear of the cab (3), and a modular power supply unit (6) being mounted between the tank (5) and the support structure (8), **characterised in that** the spray boom (10) is mounted on a boom mounting arm (7) in the form of a rectangular frame pivotally mounted on the support structure (8), the support structure (8) being upstanding from the chassis (1) at a position just forward of the rear wheel axis, the pivoting of the rectangular frame on the support structure 8 being controlled by a pair of hydraulic rams 9, to enable the boom 10, detachably mounted on the rearmost part of the arm 7, to be raised and lowered.

2. A self-propelled agricultural sprayer according to Claim 1, wherein the tank (5) and the modular power supply unit (6) are both mounted within the wheelbase of the sprayer.

3. A self-propelled agricultural sprayer according to claims 1 or 2, wherein the modular power supply unit is detachably mounted on the supporting frame or chassis and comprises an engine and a hydraulic pump for providing a pressurised hydraulic fluid flow to drive hydraulic motors on the sprayer.

4. A self-propelled agricultural sprayer according to any preceding claim, wherein the modular power supply unit (6) is bolted on to the supporting frame or chassis (1).

5. A self-propelled agricultural sprayer according to any preceding claim wherein the supporting frame or chassis (1) is carried by two pairs of wheels (2), each pair of wheels being mounted on downwardly-directed limbs (20) extending from opposed ends of a floating cross-beam (21) secured to an A-frame (22) pivotally connected to the supporting frame or chassis (1), springs (23) being mounted between the cross-beam (21) and the supporting frame or chassis (1).

6. A self-propelled agricultural sprayer according to according to any preceding claim, wherein the springs (23) comprise adjustable air springs.

## Patentansprüche

1. Selbstfahrende landwirtschaftliche Sprüheinrichtung, umfassend einen Tragrahmen oder Chassis (1), der bzw. das auf Rädern (2) montiert ist und an dem an einem Vorderende eine Fahrerkabine (3) und am anderen Ende desselben eine Tragstruktur (8) für einen Sprühausleger (10) montiert ist, einen Tank (5) für Sprühflüssigkeit, der an der Rückseite der Kabine (3) montiert ist, und eine modulare Stromversorgungseinheit (6), die zwischen dem Tank (5) und der Tragstruktur (8) montiert ist, **dadurch gekennzeichnet, dass** der Sprühausleger (10) an einem Auslegermontagearm (7) in Form eines schwenkbar an der Tragstruktur (8) montierten rechteckigen Rahmens montiert ist, die Tragstruktur (8) an einer Position unmittelbar vor der Hinterradachse aufrecht an dem Chassis (1) angeordnet ist, das Schwenken des rechteckigen Arms an der Tragstruktur (8) durch ein paar hydraulischer Druckstange (9) gesteuert wird, um ein Heben und Senken des Auslegers (10), der lösbar an dem hintersten Teil des Arms (7) montiert ist, zu ermöglichen.

2. Selbstfahrende landwirtschaftliche Sprüheinrichtung nach Anspruch 1, bei der der Tank (5) und die modulare Stromversorgungseinheit (6) beide innerhalb des Radstands der Sprüheinrichtung montiert sind.

3. Selbstfahrende landwirtschaftliche Sprüheinrichtung nach Anspruch 1 oder 2, bei der die modulare Stromversorgungseinheit lösbar an dem Tragrahmen oder Chassis montiert ist und einen Motor und eine Hydraulikpumpe zur Bereitstellung eines druckbeaufschlagten hydraulischen Flüssigkeitsstroms zum Antreiben hydraulischer Motoren an der Sprüheinrichtung umfasst.

4. Selbstfahrende hydraulische Sprüheinrichtung nach einem der vorgenannten Ansprüche, bei der die modulare Stromversorgungseinheit (6) an den Tragrahmen oder das Chassis (1) angeschraubt ist.

5. Selbstfahrende hydraulische Sprüheinrichtung nach einem der vorgenannten Ansprüche, bei der der Tragrahmen oder das Chassis (1) durch zwei Paare von Rädern (2) getragen wird, wobei jedes Paar von Rädern an nach unten gerichteten Schenkeln (20) montiert ist, die von gegenüberliegenden Enden eines schwebenden Querträgers (21 abstehen, der seinerseits an einem A-Rahmen (22) befestigt ist, welcher schwenkbar mit dem Tragrahmen oder Chassis (1) verbunden ist, wobei Federn (23) zwischen dem Querträger (21) und dem Tragrahmen oder Chassis (1) angeordnet sind.

6. Selbstfahrende landwirtschaftliche Sprüheinrichtung nach einem der vorgenannten Ansprüche, bei der die Federn (23) einstellbare Luftfedern umfassen.

## Revendications

1. Pulvérisateur agricole automoteur, comprenant un châssis ou cadre de support (1) monté sur des roues (2) et ayant, montée sur celui-ci, à une extrémité avant de celui-ci, une cabine de conduite (3) et, à l'autre extrémité de celui-ci, une structure de support (8) portant une rampe de pulvérisation (10), un réservoir (5) pour pulvériser du liquide étant monté à l'arrière de la cabine (3), et une unité d'alimentation électrique modulaire (6) étant montée entre le réservoir (5) et la structure de support (8), **caractérisé par le fait que** la rampe de pulvérisation (10) est montée sur un bras de montage de rampe (7) sous la forme d'un cadre rectangulaire monté de manière pivotante sur la structure de support (8), la structure de support (8) étant verticale par rapport au châssis (1) dans une position juste à l'avant de l'essieu de roue arrière, le pivotement du cadre rectangulaire sur la structure de support (8) étant commandé par une paire de vérins hydrauliques (9), pour permettre à la rampe (10), montée de manière détachable sur la partie du bras (7) la plus à l'arrière, d'être relevée et abaissée.

2. Pulvérisateur agricole automoteur selon la revendication 1, dans lequel le réservoir (5) et l'unité d'alimentation électrique modulaire (6) sont tous deux montés dans l'empattement du pulvérisateur.

3. Pulvérisateur agricole automoteur selon la revendication 1 ou 2, dans lequel l'unité d'alimentation électrique modulaire est montée de manière détachable sur le châssis ou cadre de support et comprend un moteur et une pompe hydraulique pour fournir un écoulement de fluide hydraulique mis sous pression afin d'entraîner des moteurs hydrauliques sur le pulvérisateur.

4. Pulvérisateur agricole automoteur selon l'une quelconque des revendications précédentes, dans lequel l'unité d'alimentation électrique modulaire (6) est boulonnée sur le châssis ou cadre de support (1).

5. Pulvérisateur agricole automoteur selon l'une quelconque des revendications précédentes, dans lequel le châssis ou cadre de support (1) est porté par deux paires de roues (2), chaque paire de roues étant montée sur des organes dirigés vers le bas (20) s'étendant à partir d'extrémités opposées d'une traverse flottante (21) fixée à un cadre en A (22) relié de manière pivotante au châssis ou cadre de support (1), des ressorts (23) étant montés entre la traverse (21) et le châssis ou cadre de support (1).

6. Pulvérisateur agricole automoteur selon l'une quelconque des revendications précédentes, dans lequel les ressorts (23) comprennent des ressorts pneumatiques ajustables.
